(19) Europäisches Patentamt
European Patent Office
Office européen des brevets

(11) **EP 2 304 990 B1**

(12) **EUROPÄISCHE PATENTSCHRIFT**

(45) Veröffentlichungstag und Bekanntmachung des Hinweises auf die Patenterteilung:
**08.02.2012 Patentblatt 2012/06**

(21) Anmeldenummer: **09777197.6**

(22) Anmeldetag: **14.07.2009**

(51) Int Cl.:
***H04W 40/02*** *(2009.01)*

(86) Internationale Anmeldenummer:
**PCT/EP2009/005128**

(87) Internationale Veröffentlichungsnummer:
**WO 2010/012377 (04.02.2010 Gazette 2010/05)**

(54) **VERFAHREN UND ANORDNUNG ZUM BESTIMMEN EINER ROUTING-METRIK**

METHOD AND DEVICE FOR DETERMINING A ROUTING-METRIC

PROCÉDÉ ET DISPOSITIF DE DÉTERMINATION D'UNE MÉTRIQUE DE ROUTAGE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **14.07.2008 DE 102008033020**

(43) Veröffentlichungstag der Anmeldung:
**06.04.2011 Patentblatt 2011/14**

(73) Patentinhaber: **Siemens Aktiengesellschaft
80333 München (DE)**

(72) Erfinder: **BAHR, Michael
81827 München (DE)**

(74) Vertreter: **Fritzsche, Thomas
Fritzsche Patent
Naupliastrasse 110
81545 München (DE)**

(56) Entgegenhaltungen:
**US-A1- 2003 033 394**

- **IEEE: "Draft Standard for Information Technology -Telecommunications and information exchange between systems- Local and metropolitan are networks - Specific requirements" IEEE, PISCATAWAY, NJ, USA, 1. März 2008 (2008-03-01), XP040429893**
- **LIANG XIA ET AL: "A Lightweight and Self-adaptive Ad Hoc Routing Scheme for EUROPCOM Networks" COMMUNICATIONS AND VEHICULAR TECHNOLOGY IN THE BENELUX, 2007 14TH IEEE SYMPOSIUM ON, IEEE, PISCATAWAY, NJ, USA, 15. November 2007 (2007-11-15), Seiten 1-3, XP031339008 ISBN: 9781424413690**
- **Michelle Gong: "Thougths on Interaction between Power Management and Path Selection" 10. Juli 2007 (2007-07-10), XP002554214 Gefunden im Internet: URL:https://mentor.ieee.org/802.11/file/07/11-07-2095-01-000s-interaction-between-power-management-and-path-selection.ppt> [gefunden am 2009-11-04] in der Anmeldung erwähnt**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 304 990 B1

Printed by Jouve, 75001 PARIS (FR)

**Beschreibung**

Die Erfindung betrifft ein Verfahren und eine Vorrichtung zum Bestimmen einer Routing-Metrik in Mesh-Netzwerken, insbesondere gemäß dem Standard IEEE 802.11s in Wireless Mesh Netzwerken, wobei die auf unterschiedlichen Pfaden vom Quellknoten über die Mesh-Knoten des Mesh-Netzwerkes zum Zielknoten gesandten Routing-Nachrichten ausgewertet werden, um den besten Pfad für die Übertragung der Datenpakete vom Quellknoten zum Zielknoten zu ermitteln.

WO 2008/122674 A2 offenbart ein Verfahren zum Betreiben eines nach Art des Mesh, insbesondere gemäß dem Standard IEEE 802.11s, aus einer Vielzahl von Netzwerkknoten gebildeten Netzwerks. Hieraus ist bekannt, sechs Adressen in den Datenpaketen zu verwenden.

In der am 7.5.2009 angemeldeten PCT-Anmeldung PCT/EP2009/003271 ist ein Verfahren und eine Vorrichtung zum Erstellen von zumindest einer Erweiterung einer Zuordnungsnachricht für Wireless Mesh Netze beschrieben, in der der Aufbau von möglichen Zuordnungstabellen für zu übertragene Datenpakete beschrieben ist.

Ein grundlegendes Prinzip in drahtlosen Mesh-Netzen bzw. mobilen Ad-hoc-Netzen ist das Weiterleiten von Datenpaketen anderer Knoten durch die MeshKnoten. Das bedeutet, dass ein Mesh-Knoten auch dann Energie für das Senden und Empfangen von Datenpaketen verbraucht, wenn er selber nichts zu senden oder zu empfangen hat. Das kann zu einem schnelleren Batterieverbrauch bei batteriebetriebenen Mesh-Knoten führen.

Um die Lebensdauer der Batterie zu erhöhen, verwenden batteriebetriebene Geräte auch oft einen Energiesparmodus, bei dem sie ihre Funkschnittstelle zeitweise in einen Schlafmodus versetzen. Dieser Schlafmodus benötigt nur sehr wenig Energie, allerdings können Geräte im Schlafmodus keine Datenpakete empfangen oder versenden. Datenverlust tritt nicht ein, da die Datenpakete solange zwischengespeichert werden können, bis das Gerät im Energiesparmodus wieder aus dem Schlafmodus heraus ist. Allerdings erhöht sich die Verzögerung bei der Paketübermittlung. Je nach Dauer des Schlafmodus kann das recht viel sein, insbesondere bei Multihop-Verbindungen über Geräte im Energiesparmodus in drahtlosen Mesh-Netzen bzw. mobilen Ad-hoc-Netzen.

Der derzeitig in der Entwicklung befindliche Standard IEEE 802.11s WLAN Mesh Networking in der Version "IEEE P802.11s™/D2.0 Draft STANDARD for Information Technology -Telecommunications and information exchange between systems - Local and metropolitan area networks - Specific requirements, Part 11: Wireless LAN Medium Access Control (MAC) and Physical Layer (PHY) specifications, siehe auch Amendment <number>: Mesh Networking". März 2008, Seiten I-XVII und 1-242, XP040429893, nachstehend, "IEEE P802.11sID2.0 DraftStandard" genannt - beschreibt in Abschnitt 11 B.9, Seiten 183-214 das Routing-Protokoll "Hybrid Wireless Mesh Protocol (HWMP)", das eine Management-Variable enthält, die festlegt, ob ein Mesh-Knoten Datenpakete anderer Mesh-Knoten weiterleiten soll oder nicht. Sollen keine Datenpakete weitergeleitet werden, werden die Routing-Nachrichten von HWMP so verarbeitet, dass keine Pfade durch diese Knoten aufgebaut werden können. Solche nichtweiterleitenden Knoten können aber nur Endoder Anfangspunkt eines Pfades sein, so dass eventuell das Mesh-Netz in zwei oder mehrere Teile zerfallen kann, wenn dieser Knoten die einzige Verbindung ist.

In der Druckschrift von Ian D. Chakeres, Elizabeth M. Belding-Royer: "Transparent Influence of Path Selection in Heterogeneous Ad hoc Networks", 15th IEEE International Symposium on Personal, Indoor and Mobile Radio Communications (PIMRC), Barcelona, Spanien, September 2004, 3 Seiten, wird eine Eigenschaft des Ad hoc On-Demand Distance Vector (AODV) bei der Pfadauswahl ausgenutzt. Der Zielknoten antwortet im Standard-AODV [siehe auch in Charles E. Perkins, Elizabeth M. Belding-Royer, Samir R. Das: "Ad hoc On-Demand Distance Vector (AODV) Routing", IETF RFC 3561 (Experimental), Juli 2003, Seiten 1-36] nur auf die erste Route-Request-Nachricht, nachfolgende Route-Request-Nachrichten werden nicht berücksichtigt. Aus diesem Grund wird das Weiterleiten der Route-Request-Nachrichten an batteriebetriebenen Mesh-Knoten verzögert, so dass Route-Request-Nachrichten von Pfaden ohne batteriebetriebene Zwischen-Mesh-Knoten bzw. mit den wenigsten batteriebetriebenen Zwischen-Mesh-Knoten zuerst am Zielknoten ankommen. HWMP aus IEEE P802.11s/D2.0 Draft-Standard beruht zwar auf AODV, berücksichtigt aber alle Route-Request-Nachrichten am Ziel-Mesh-Knoten. Deshalb kann dieser Mechanismus nicht in einem IEEE P802.11s/D2.0 Draft-Standard - Mesh-Network mit HWMP verwendet werden.

In der Druckschrift von Michelle Gong, Kazuyuki Sakoda, Jarkko Kneckt: "Thoughts on Interaction between Power Management and Path Selection', Juli 2007, IEEE 802.11, Dokument 11-07/2095r3, Folien 1-23, insbesondere Folien 17-18, werden zwei Ideen erwähnt, wie Pfade über batteriebetriebene Mesh-Knoten vermieden werden können:

- In der ersten Idee, die nur grob erwähnt wird, werden die Mesh-Knoten anhand ihrer Energiequelle (Stromkabel oder Batterie) und des Batteriestandes (unkritisch / kritisch) charakterisiert. Diese Einordnung wird in Beacons übermittelt, so dass die Weiterleitung von Routing-Nachrichten selektiv erfolgen kann.
- In der zweiten Idee wird den Routing-Nachrichten ein Wake-Up-Bit hinzugefügt. Ist es nicht gesetzt, ignorieren batteriebetriebenen MeshKnoten diese Routing-Nachrichten. Ist es gesetzt, werden die Routing-Nachrichten durch die batteriebetriebenen Mesh-Knoten bearbeitet. Will ein Knoten einen Pfad aufbauen, so wird zuerst das Wake-Up-Bit nicht gesetzt, so dass im Falle eines erfolgreichen Pfadaufbaues in diesem Pfad keine batteriebetriebenen Geräte enthalten wären. Konnte kein Pfad aufgebaut werden, wird das Wake-Up-Bit gesetzt, so dass jetzt auch batteriebetriebenen Geräte beim Pfadaufbau berücksichtigt werden.

Diese Methode hat drei entscheidende Nachteile:

- Die große Latenzzeit, bis ein Pfad gefunden wird, falls nur Pfade über batteriebetriebene Geräte zur Verfügung stehen.
- Ein Pfad über mehrere batteriebetriebene Mesh-Knoten mit sehr guter Pfadmetrik wird gegenüber einem Pfad mit nur einem Batterie betriebenen Mesh-Knoten aber etwas schlechterer Pfadmetrik bevorzugt, obwohl der schlechtere Pfad qualitativ ausreichend wäre und die bessere Energiebilanz hätte.
- Der Ziel-Mesh-Knoten bekommt keine Information darüber, ob ein Pfad über batteriebetriebene Mesh-Knoten verläuft.

In der Druckschrift von Liwen Chu, George Vlantis: "Symmetrical Airtime Link Metric Report and Path Loop Avoidance", April 2008, IEEE 802.11 Dokument 11-0810636r0, Folien 1-10, insbesondere in Folien 3-4, wird vorgeschlagen, dass batteriebetriebene Mesh-Knoten die Länge des Beacon-Intervals geteilt durch 2 zur Link-Metrik hinzuaddieren. Dieser Vorschlag wurde speziell für die im IEEE P802.11s/D2.0 Draft-Standard enthaltene Airtime-Link-Metrik gemacht. Batteriebetriebene Mesh-Knoten werden dadurch seltener ausgewählt, der Ziel-Mesh-Knoten bekommt allerdings keine Information darüber, ob ein Pfad über batteriebetriebene Mesh-Knoten verläuft.

Die Erfindung hat sich die Aufgabe gestellt, Pfade im drahtlosen Mesh-Netz bzw. mobilen Ad-hoc-Netz so zu bestimmen, dass batteriebetriebene und Mesh-Knoten im Energiesparmodus nur dann als Zwischenknoten eines Pfades verwendet werden, wenn es aufgrund der notwendigen Konnektivität im Mesh-Netz oder aufgrund vorgegebener Richtlinien nicht zu vermeiden ist.

Diese Aufgabe wird durch das Verfahren nach Anspruch 1 und durch die Anordnung nach Anspruch 11 zur Durchführung des Verfahrens nach Anspruch 1 gelöst.

Bei dem erfindungsgemäßen Verfahren werden zum Bestimmen einer Routing-Metrik in Mesh-Netzwerken, insbesondere gemäß dem Standard IEEE 802.1 ins in Wireless Mesh-Netzwerken, auf unterschiedlichen Pfaden vom Quellknoten über die Mesh-Knoten des Mesh-Netzwerkes zum Zielknoten gesandte Routing-Nachrichten ausgewertet, um den besten Pfad für die Übertragung der Datenpakete vom Quellknoten zum Zielknoten zu ermitteln.

Hierbei wird in jeder vom Quellknoten über unterschiedliche Pfade zum Zielknoten gesandten Routing-Nachricht eine Anzahl Bits, vorzugsweise zwei Bits, für die Anzahl der im Pfad im Energiesparmodus bzw. mit Batteriebetrieb betriebenen Mesh-Knoten verwendet, während die restlichen Bits der Routing-Nachricht für die Pfadmetrik verwendet wird.

Die Auswahl des besten Pfades erfolgt an Hand von vorgegebenen Auswahlregeln. Als Grundregel wird vorzugsweise der Pfad ausgewählt, der die wenigstens Mesh-Knoten bzw. Hops hat und dessen Pfadmetrik unterhalb eines vorgegebenen Schwellenwertes liegt, wobei bei Gleichheit der Anzahl batteriebetriebener bzw. im Energiesparmodus betriebener Mesh-Knoten, der Pfad mit der besseren Pfadmetrik ausgewählt wird.

Die Erfindung hat folgende wesentlichen Vorteile:

- Die Erfindung verbessert die Berücksichtigung von Batterie betriebenen MeshKnoten und Mesh-Knoten im Energiesparmodus bei der Pfadauswahl in drahtlosen Mesh-Netzen.
- Der Zielknoten, der die eigentliche Pfadauswahl zu treffen hat, bekommt explizit, quantitative Informationen zu dem Vorhandensein und der Anzahl von batteriebetriebenen Geräten in den entsprechenden Pfaden.
- Die eigentliche Pfadmetrik, die oft das Funkumfeld widerspiegelt und oft unabhängig vom Batteriebetrieb einzelner Geräte im Pfad ist, wird nicht verändert. Dadurch erhält der Zielknoten unverfälschte Informationen über die Pfadmetrik unabhängig von der Anzahl der batteriebetriebenen Geräte im Pfad.

Weitere Vorteile ergeben sich aus den abhängigen Ansprüchen sowie aus der nachfolgenden Beschreibung der Ausführungsbeispiele.

Vier Ausführungsbeispiele der Erfindung werden an Hand von Figuren nachstehend beschrieben. Darin zeigen:

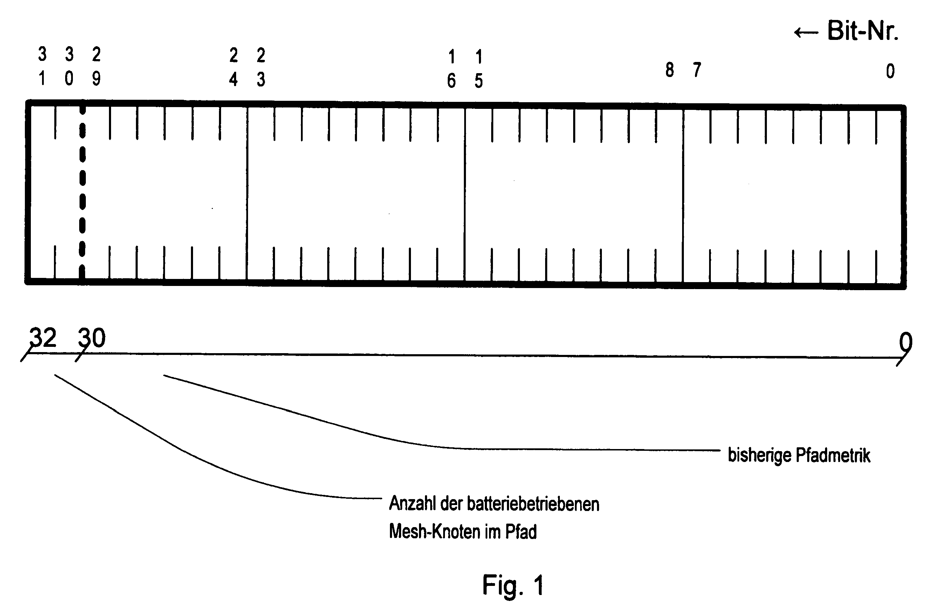

Fig. 1 ein Beispiel für ein Pfadmetrikfeld mit 32 Bits, bei dem die Umsetzung der "Anzahl der batteriebetriebenen Mesh-Knoten im Pfad" in HWMP mit zwei Bits (N=3) erfolgt,

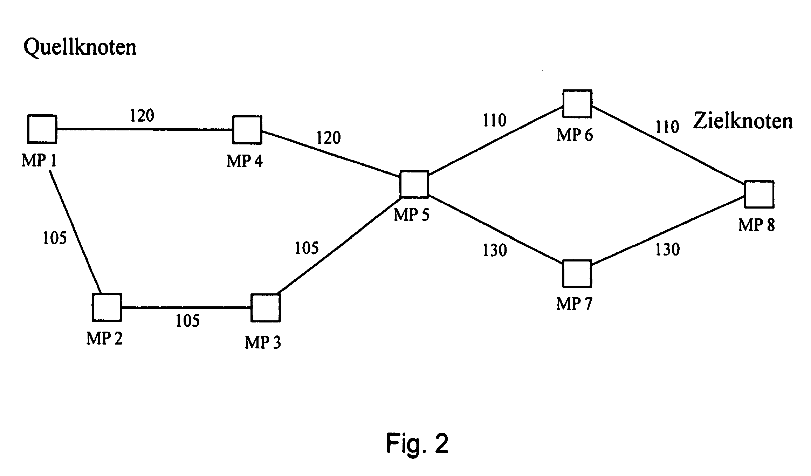

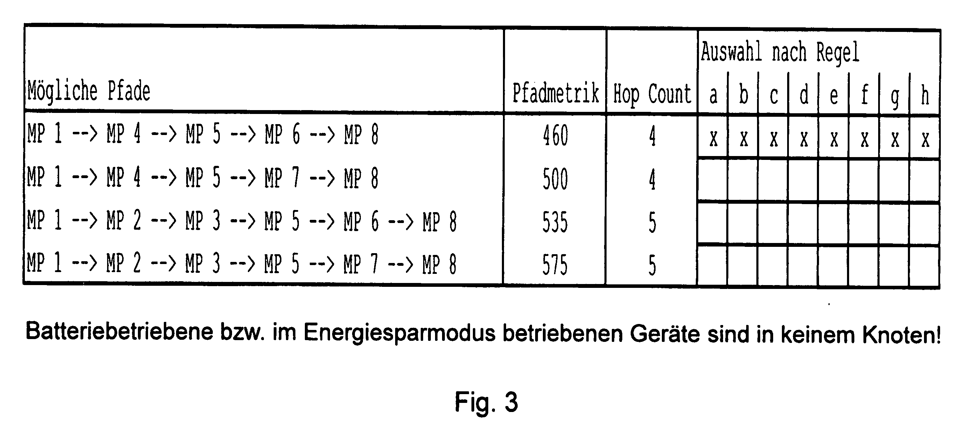

Fig. 2: ein Beispiel eines Mesh-Netzes zur Erläuterung von vier Ausführungsbeispielen gemäß den Fig. 3 - 6.

Fig. 3. für ein erstes Ausführungsbeispiel in Tabellenform vier mögliche Pfade, die jeweils zugeordneten Pfadmetrikwerte m_A, m_:B, ..., m_X,, die Anzahl der jeweiligen Hops und die jeweilige Auswahl der möglichen Pfade nach den Regeln a) bis h) für das Mesh-Netz der Fig.2; wobei bei keiner der Mesh-Knoten ein Gerät im Energiesparmodus bzw. ein batteriebetriebenes Gerät enthält.

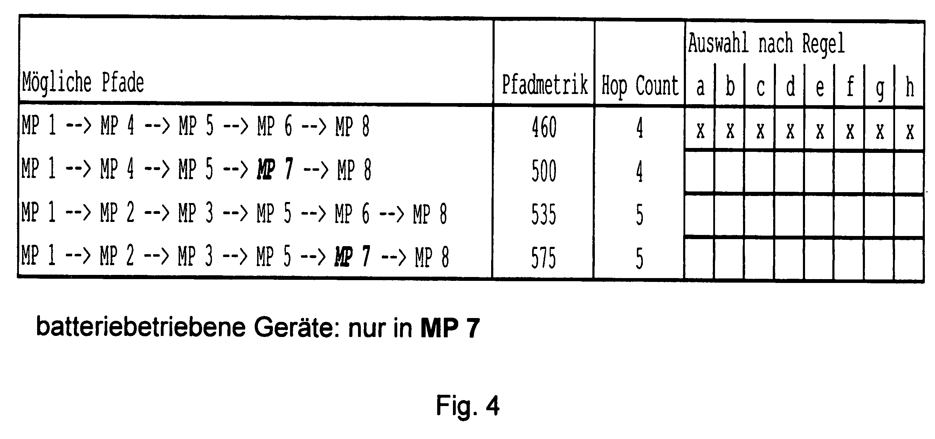

Fig. 4. für ein zweites Ausführungsbeispiel in Tabellenform vier mögliche Pfade, die jeweils zugeordneten Pfadmetrikwerte m_A, m_B, ..., m_X,, die Anzahl der jeweiligen Hops und die jeweilige Auswahl der möglichen Pfade nach den Regeln a) bis h) für das Mesh-Netz der Fig.2; wobei nur der Mesh-Knoten: **MP 7** Geräte im Energiesparmodus bzw. batteriebetriebene Geräte enthält.

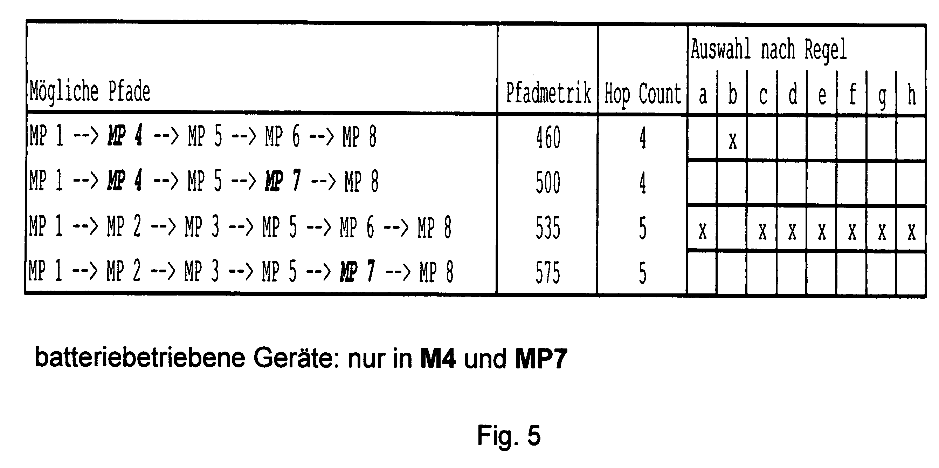

Fig. 5. für ein drittes Ausführungsbeispiel in Tabellenform vier mögliche Pfade, die jeweils zugeordneten Pfadmetrikwerte m_A, m_:B, ..., m_X, , die Anzahl der jeweiligen Hops und die jeweilige Auswahl der möglichen Pfade nach den Regeln a) bis h) für das Mesh-Netz der Fig.2; wobei nur die Mesh-Knoten: **MP 4 und MP 7** Geräte im Energiesparmodus bzw. batteriebetriebene Geräte enthalten.

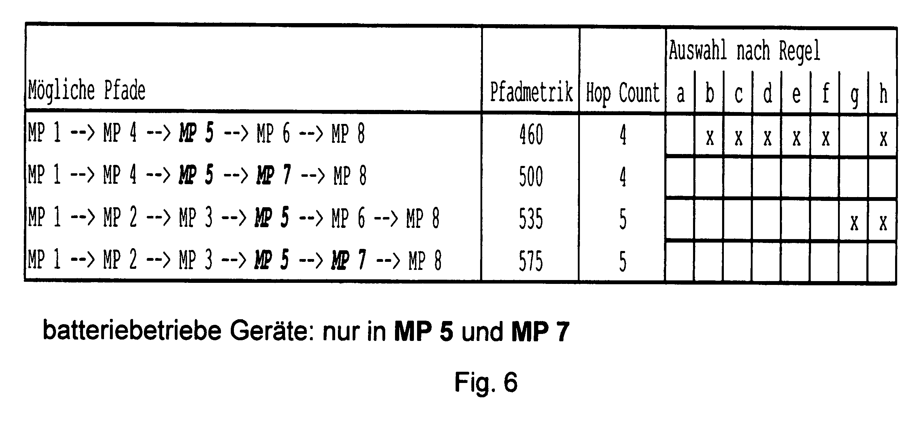

Fig. 6. für ein viertes Ausführungsbeispiel in Tabellenform vier mögliche Pfade, die jeweils zugeordneten Pfadmetrikwerte m_A, m_:B, ..., m_X, , die Anzahl der jeweiligen Hops und die jeweilige Auswahl der möglichen Pfade nach den Regeln a) bis h) für das Mesh-Netz der Fig.2; ; wobei nur die Mesh-Knoten: **MP 5 und MP 7** Geräte im Energiesparmodus bzw. batteriebetriebene Geräte enthalten.

Die Erfindung besteht im Wesentlichen darin, dass als Routing-Metrik zwei Parameter verwendet werden:

- die bisherige Routing-Metrik
- die Anzahl p der batteriebetriebenen bzw. im Energiesparmodus betriebenen Mesh-Knoten im Pfad.

Aus technisch-funktionaler Sicht enthält der neue Parameter "Anzahl der batteriebetriebenen bzw. im Energiesparmodus betriebenen Mesh-Knoten im Pfad" eigentlich die "Anzahl der Mesh-Knoten im Pfad, die eigentlich lieber keine Datenpakete für andere Mesh-Knoten weiterleiten würden oder sollten". Die beiden wichtigsten Gründe für solch ein Verhalten sind:

- Batteriebetrieb, da dadurch die Batterie geschont wird,
- Energiesparmodus, bei dem Latenzzeiten beim Weiterleiten auftreten und der oft bei batteriebetriebenen Geräten eingesetzt wird.

Aus diesem Grund wird der neue Parameter "Anzahl der batteriebetriebenen bzw. im Energiesparmodus betriebenen Mesh-Knoten im Pfad" genannt, auch wenn die entsprechenden, hier gezählten Geräte nicht notwendigerweise batteriebetrieben sein müssen und nicht alle batteriebetriebenen Geräte hier gezählt werden müssen, z.B. wenn sie nur temporär batteriebetrieben arbeiten und auch nicht im Energiesparmodus sind, wie z.B. Laptops. Ob ein Mesh-Knoten bei diesem neuen Parameter mitgezählt wird, sollte durch einen Konfigurationsparameter, z.B. ein Flag oder eine MIB-Variable festgelegt werden, wobei MIB die Abkürzung für Management Information Base ist.

Der Wertebereich des Parameters "Anzahl der Anzahl der batteriebetriebenen bzw. im Energiesparmodus betriebenen Mesh-Knoten im Pfad" ist eine positive ganze Zahl und geht von 0 bis N, wobei N bedeutet, dass sich N oder mehr batteriebetriebene Mesh-Knoten im Pfad befinden.
Jeder batteriebetriebene Knoten erhöht den Parameter *p* für die "Anzahl der batteriebetriebenen bzw. im Energiesparmodus betriebenen Mesh-Knoten im Pfad" um 1 beim Aktualisieren der Pfadmetrik, es sei denn, der Parameter *p* hat bereits seinen Maximalwert N erreicht:

$$p_{neu} = \begin{cases} p_{alt} + 1 & p_{alt} < N \\ N & p_{alt} = N \end{cases}$$

Die Festlegung von N wird bedingt durch die angestrebte Granularität dieses Parameters versus der dafür benötigten Ressourcen (Anzahl von Bits). Wird nur ein Bit verwendet, so ist N=1 und es sind nur 2 Werte möglich. In der Praxis bedeutet dies, dass nur die Aussage, ob Batterie betriebene Mesh-Knoten sich im Pfad befinden oder nicht, möglich ist. Wird mehr als ein Bit verwendet, so sind auch quantitative Aussagen über die Anzahl der batteriebetriebenen Mesh-Knoten im Pfad möglich. Je nach Größe des Mesh-Netzes können bereits 2 Bits (N=3) ausreichen.

Der Ziel-Knoten erhält nun Routing-Nachrichten, insbesondere Route-Request- und Path-Request-Nachrichten, die neben der bisherigen Routing-Metrik auch eine Aussage zum Vorhandensein von Batterie betriebenen MeshKnoten im entsprechenden Pfad haben. Diese zusätzliche Information kann jetzt bei der Pfadauswahl berücksichtigt werden. Dabei können unterschiedliche Ziele verfolgt werden, so dass verschiedene Regeln für die Pfadauswahl verwendet werden können.

Mögliche Regeln a) bis h) für die Pfadauswahl, also ob der Pfad A oder der Pfad B im Mesh-Netz "besser" ist, sind im folgenden aufgelistet.

Dabei gelten **folgende Definitionen**:

- P_Ader Pfad A,
- P_B der Pfad B,
- P_A < P_B, dass der Pfad A besser ist als der Pfad B,
- m_A die Pfadmetrik des Pfades A,
- m_B die Pfadmetrik des Pfades B,
- m_X die Pfadmetrik des Pfades X,

- m_A < m_B, dass die Pfadmetrik des Pfades A besser ist als die Pfadmetrik des Pfades B,
- n_A die Anzahl der batteriebetriebenen Mesh-Knoten im Pfad A,
- n_B die Anzahl der batteriebetriebenen Mesh-Knoten im Pfad B,
- n_X B die Anzahl der batteriebetriebenen Mesh-Knoten im Pfad X,
- h_A die Anzahl der Hops des Pfades A,
- h_B die Anzahl der Hops des Pfades B,
- h_X die Anzahl der Hops des Pfades X.

Zur Pfadauswahl werden erfindungsgemäß jeweils Eigenschaften zweier beliebiger Pfade A und B aus der Menge aller möglichen Pfade X miteinander verglichen. Folgende Regeln a) bis h) werden in Verbindung mit den vier Ausführungsbeispielen gemäß Fig. 3 bis Fig. 6 angewandt:

**a) Nur Pfade ohne batteriebetriebene bzw. im Energiesparmodus betriebene Mesh-Knoten werden verwendet!**
**Bedingung:** n_A = n_B = 0, ansonsten wird der Pfad nicht betrachtet.
P_A < P_B, wenn (m_A < m_B) und (n_A = n_B = 0)
**b) Es wird der Pfad mit der besten Metrik verwendet.**

- Das Vorhandensein von batteriebetriebenen bzw. im Energiesparmodus betriebenen Mesh-Knoten spielt keine Rolle.
- **P_A < P_B, wenn m_A < m_B**

c) Es wird der beste der Pfade mit den wenigsten batteriebetriebenen bzw. im Energiesparmodus betriebenen **Mesh-Knoten verwendet**

- Bedingung: n_A ist das Minimum aller n_X
- P_A < P_B, wenn (n_A < n_B) oder {(n_A = n_B) und (m_A < m_B))

**d) Für jeden batteriebetriebenen bzw. im Energiesparmodus betriebenen Mesh-Knoten im Pfad wird ein "Strafwert" $p_s$ der Pfadmetrik hinzugefügt..**

- P_A < P_B, wenn m_A + n_A * $p_s$ < m_B + n_B * $p_s$ [* bedeutet Malzeichen]

**e) Aus allen Pfaden mit einer Metrik besser oder gleich als der Pfadmetrik-Schwellenwert T_p wird der Pfad mit den wenigsten batteriebetriebenen bzw. im Energiesparmodus betriebenen MeshKnoten ausgewählt**

- T_p kann dabei absolut in Abhängigkeit der verwendeten Metrik oder relativ zum besten Metrilcwert festgelegt werden (T_p = min(m_X) + s * min(m_X), wobei ε eine positive reelle Zahl ist, bevorzugt 0≤ ε ≤ 1).).
- Bedingung: m_A ≤ T_p und m_B ≤ T_p und n_A ist das Minimum aller n_X mit m_X ≤ T_p
- P_A<P_B, wenn ((n_A < n_8) und (m_A ≤ T_p) und (m_B ≤ T_p)) oder
((n_A = n_B) und (m_A < m_B) und (m_A ≤ T_p) und (m_B ≤ T_p))

**f) Aus allen Pfaden mit einer durchschnittlichen Link-Metrik besser oder gleich als der Linkmetrik-Schwellenwert T_l wird der Pfad mit den wenigsten batteriebetriebenen bzw. im Energiesparmodus betriebenen Mesh-Knoten ausgewählt.**

- T_l kann dabei absolut in Abhängigkeit der verwendeten Metrik oder relativ zum besten Metrikwert festgelegt werden (T l = min(m X 1 h X) + ε * min(m_X / h_X), wobei ε eine positive reelle Zahl ist, bevorzugt 0≤ ε ≤ 1).
- Bedingung: m_A / h_A ≤ T_l und m_B / h_B ≤ T_l und
n_A ist das Minimum aller n_X mit m_X / h_X ≤ T_l
- P_A < P_B, wenn ((n_A < n_B) und (m_A / h_A ≤ T_1) und (m_B / h_B ≤ T_l))
oder ((n_A = n_B) und (m_A < m_B) und (m_A / h_A ≤ T_l) und (m_B / h_B <_ T_l))

**g) Der Pfad mit dem kleinsten Anteil von batteriebetriebenen bzw. im Energiesparmodus betriebenen Mesh-Knoten wird ausgewählt. P_A <** P_B, **wenn** (n_A / h_A < n_B / h_B) **oder** ((n_A / h_A = n_B / h_B) und (m_A < m_B))
**h) Kombinationen der Regeln sind ebenfalls möglich.**

- Zum Beispiel können zuerst Pfade nur ohne batteriebetriebene bzw. im Energiesparmodus betriebene Mesh-Knoten betrachtet werden [Regel a)].
- Erst wenn es solche nicht gibt, kommt eine andere Regel, die auch Pfade mit batteriebetriebenen Mesh-Knoten berücksichtigt, zum Einsatz [z.B. Regel b), c), d), e,) f), oder g)].

Für den Maximalwert N des Parameters *p* = "Anzahl der batteriebetriebenen MeshKnoten im Pfad" scheint N=3 ein optimaler Wert für Mesh-Netze bis ca. 50 MeshKnoten aus den folgende Gründen zu sein:

- N=3 lässt eine feinere Differenzierung als N=1 (1 Bit) zu. Es kann ein Pfad mit einer guten Metrik aber 1, 2, oder 3 batteriebetriebenen Geräten gegen einen Pfad mit einer schlechteren Metrik aber keinem batteriebetriebenem Gerät abgewogen werden.
- N=3 kann mit 2 Bits platzsparend repräsentiert werden.

- 3 Bits würden zwar bereits zu N=7 führen. Eine Unterscheidung, ob jetzt 4 oder 7 batteriebetriebene Mesh-Knoten sich im Pfad befinden, führt oft nicht zu einer anderen Pfadauswahl. Die Pfade sind mit solch einer Menge an batteriebetriebenen Mesh-Knoten sowieso schon unvorteilhaft.

Die Erfindung verbessert die Berücksichtigung von batteriebetriebenen bzw. im Energiesparmodus betriebenen Mesh-Knoten und Mesh-Knoten im Energiesparmodus bei der Pfadauswahl in drahtlosen Mesh-Netzen.

Der Zielknoten, der die eigentliche Pfadauswahl zu treffen hat, bekommt explizit, quantitative Informationen zu dem Vorhandensein und der Anzahl von batteriebetriebenen bzw. im Energiesparmodus betriebenen Geräten in den entsprechenden Pfaden.

Die eigentliche Pfadmetrik, die oft das Funkumfeld widerspiegelt und oft unabhängig vom Batteriebetrieb bzw. Energiewsparmodus einzelner Geräte im Pfad ist, wird nicht verändert. Dadurch erhält der Zielknoten unverfälschte Informationen über die Pfadmetrik unabhängig von der Anzahl der batteriebetriebenen Geräte im Pfad.

Die Erfindung hat keine zusätzliche Latenzzeit wie in der oben genannten Druckschrift von Michelle Gong, Kazuyuki Sakoda, Jarkko Kneckt: "Thoughts on Interaction between Power Management and Path Selection', Juli 2007, IEEE 802.11 Dokument 11-07/2095r3, siehe insbesondere Folien 17-18, wo erst bei der Wiederholung des Path Request batteriebetriebene Mesh-Knoten berücksichtigt werden. Die Erfindung berücksichtigt batteriebetriebene MeshKnoten bereits im ersten Path Request, kann aber trotzdem die gleichen Entscheidungen treffen wie in dieser Druckschrift Michelle Gong et al ("bester Pfad, der keine batteriebetriebenen bzw. im Energiesparmodus betriebenen Mesh-Knoten enthalt" und "bester Pfad unabhängig von der Anzahl der batteriebetriebenen bzw. im Energiesparmodus betriebenen Mesh-Knoten im Pfad") sowie auch viel granularere Abwägungen machen.

Durch die Anwendung verschiedener Regeln können bei der Pfadauswahl im Zielknoten die Verwendung von batteriebetriebenen bzw. im Energiesparmodus betriebenen Geräten und die Qualität des Pfades (Pfadmetrik) entsprechend den Zielstellungen gegeneinander abgewogen werden. Das im "IEEE P802.11s/D2.0 Draft-Standard" spezifizierte Routing-Protokoll HWMP (Hybrid Wireless Mesh Protocol) verwendet in seinen Routing-Nachrichten (Route Request, Route Reply, etc.) ein Metrik-Feld, das vier Oktetts (32 Bits) lang ist. Um die Erfindung in HWMP umzusetzen, können z.B. m Bits dieses Metrik-Feldes für den neuen Parameter *p* = "Anzahl der batteriebetriebenen bzw. im Energiesparmodus betriebenen Mesh-Knoten im Pfad" verwendet werden. Der verfügbare Platz für die bisherige Metrik-Feld verkürzt sich dann auf (32 - m ) Bits.

Fig. 1 zeigt exemplarisch das 32 Bits umfassende Metrik-Feld von HWMP-Nachrichten mit der Erweiterung durch die Erfindung. Dabei werden für den neuen Parameter *p* für die "Anzahl der batteriebetriebenen bzw. im Energiesparmodus betriebenen Mesh-Knoten im Pfad" die obersten zwei Bits verwendet. Im Beispiel aus Fig. 1 werden zwei Bits für diesen neuen Parameter *p* verwendet, was dem in der Erfindung als optimal betrachteten Wert von N=3 entspricht. Somit stehen 30 Bits für die Pfadmetrik zur Verfügung und zwei Bits für die "Anzahl der batteriebetriebenen Mesh-Knoten im Pfad". Der Wert der Pfadmetrik kann durch jede mit 30 Bits darstellbare Zahl dargestellt werden, die vom Netzwerk entsprechend dem "IEEE P802.11s/D2.0 Draft-Standard" für den entsprechenden Pfad gesetzt wird. In der Regel sind nach diesem Standard insgesamt 32 Bits zur Definition des Pfadmetrikwertes vorgesehen, wobei bei der vorliegenden Erfindung nur 30 Bits für den Pfadmetrikwert verwendet werden und die frei gewordenen 2 Bits, hier in Fig. 1 die oberen beiden Bits, für den neuen Parameter *p* für die "Anzahl der batteriebetriebenen bzw. im Energiesparmodus betriebenen Mesh-Knoten im Pfad" verwendet wird.

Die Pfadauswahl entsprechend der Erfindung wird für alle in der Erfindung vorgestellten Regeln exemplarisch an dem in Fig. 2 dargestellten drahtlosen Mesh-Netz illustriert. Dabei werden unterschiedliche Mesh-Knoten als Mesh-Knoten im Energiesparmodus bzw. als batteriebetriebene Knoten betrachtet, also Mesh-Knoten, die den neuen Parameter *p* bei der Pfadsuche erhöhen.

Für die in den Regeln a) bis h) verwendeten zusätzlichen Parameter werden in den vier in den Figuren 3 bis Fig. 6 beschriebenen Ausführungsbeispielen die folgenden Werte als gegeben verwendet:

- "Strafwert" $p_s$ = 80 für Regel d)
- Pfadmetrik-Schwellenwert T_p) = min(m_X) + c * min(m_X)
  mit c = 0,2 und min(m_X) = 460
- Pfadmetrik-Schwellenwert T_p = 552
- Linkmetrik-Schwellenwert T_l = 120 (fester Wert)

Fig. 2 zeigt ein Beispiel eines Mesh-Netzes zur Erläuterung von vier Ausführungsbeispielen gemäß den Fig. 3 - 6.

Das Mesh-Netz hat die acht Mesh-Knoten MP 1, MP 2, MP 3, MP 4, MP 5, MP 6, MP 7 und MP 8. Es sind viel mögliche Pfade vom Quellknoten MP 1 zum Zielknoten MP 8 möglich, die alle über den Mesh-Knoten MP 5 verlaufen. Jeder der Mesh-Knoten MP 1, MP 2, MP 3, MP 4, MP 6, MP 7 und MP 8 hat eine Verbindung zu zwei Nachbarknoten. Dagegen hat der Mesh-Knoten MP 5 je eine Verbindung zu den vier benachbarten Mesh-Knote MP 3, MP 4, MP 6 und MP 7. Jede Verbindung zweier benachbarter Mesh-Knoten hat einen zugeordneten Linkmetrikwert, der jeweils daneben geschrieben ist. Je kleiner der jeweilige Linkmetrikwert ist, umso "besser" ist die jeweilige Verbindung. "Besser" kann z.B. bedeuten, dass die Verbindungskosten geringer sind oder dass die Datenübertragungsqualität besser ist oder dass es eine schnellere Datenverbindung ist. Die Summe der Linkmetrikwerte eines Pfades ist der Pfadmetrikwert, der in die rechten 30 Bits des Pfadmetrikfeldes mit 32 Bits in Fig. 1 erfolgt, wobei die "Anzahl der batteriebetriebenen Mesh-Knoten im Pfad" in HWMP mit zwei Bits (N=3) in Bit 31 und Bit 32 eingesetzt wird.

In jeder der Fig. 3 bis Fig. 6 wird eine Tabelle zur jeweiligen Pfadauswahl angegeben. Die Tabellen sind nach dem gleichen Matrixschema angeordnet, weshalb das Tabellenschema an Hand der Fig. 3 nachstehend erklärt wird. Die erste Spalte gibt die vier möglichen Pfade an. In der zweiten Spalte wird zu jedem möglichen Pfad die Summe aller Linkmetrikwerte jeweils angegeben. In der dritten Spalte ist die Zahl der Hops (Hop Count) angegeben, der der jeweiligen Anzahl der Knoten pro Pfad weniger 1 entspricht, d. h. der jeweilige Pfad in der ersten beiden Reihen hat insgesamt jeweils 5 Knoten, ohne Quellknoten somit 4 Hops.

In der vierten Spalte wird nach Anwendung jeder Regeln a) bis h) durch ein "x" angegeben, ob dieser Pfad nach jeder der Regeln ausgewählt wird oder ob er nicht ausgewählt werden kann, was durch eine graue Schraffur angezeigt ist. Die vier Ausführungsbeispiele unterscheiden sich durch Vorhandensein unterschiedlicher Ausstattung der Mesh-Knoten mit Batterie oder im Energiesparmodus betriebenen Geräten. Hierzu werden jeweils solche MeshKnoten mit Batterie oder im Energiesparmodus betriebenen Geräten in der linken Spalte fett gedruckt.

Für den in der ersten Reihe genannten Pfad MP 1 - MP 4 - MP 5 - MP 6 - MP8, der den oberen Weg in der Fig. 1 entspricht, ergibt sich der Pfadmetrikwert zu 460 = 120 + 120 + 110 + 110 aus der Summe der einzelnen vier Linkmetrikwerten (2 x 120 + 2 x 110 = 460). Der für die Regel f) benötigte durchschnittliche Linkmetrikwert $m_A/h_A$ ergibt sich zu 460 : 4 = 115. Beispielsweise für Fig. 3 und Regel f) $m_A/h_A = 115 \leq T_I = 120$ ist die erste Bedingung der Regel f) somit erfüllt. Da keine batteriebetriebenen bzw. im Energiesparmodus betriebenen Geräte in dem Pfad enthalten sind, sind auch alle anderen Bedingungen ebenfalls erfüllt, weshalb im Feld unter Regel f) in der ersten Reihe ein "x" eingetragen ist. Dieser Pfad steht nach Regel f) somit zur Verfügung.

Für den **in der zweiten Reihe genannten Pfad MP 1 - MP 4 - MP 5 - MP 7-**MP8, der in der Fig. 1 den oberen Weg in der linken Hälfte und dem unteren Weg in der rechten Hälfte entspricht, ergibt sich der Pfadmetrikwert zu 500 = 120 + 120 + 130 + 130 aus der Summe der einzelnen vier Linkmetrikwerten (2 x 120 + 2 x 130 = 500). Der für die Regel f) benötigte durchschnittliche Linkmetrikwert $m_Alh_A$ ergibt sich zu 500 : 4 = 125. Beispielsweise für **Fig. 3 und Regel f)** gilt die erste Bedingung $m_Alh_A = 125 \leq T_I = 120$ nicht, weshalb die erste Bedingung der Regel f) somit nicht erfüllt. weshalb das Feld unter Regel f) schwarz schraffiert ist., so dass dieser Pfad nicht zur Verfügung steht

Für den Pfad in der dritten bzw. vierten Reihe ergibt sich der für die Regel f) benötigte durchschnittliche Linkmetrikwert $m_Alh_A$ zu 535 : 5 = 107 bzw. 575.5 = 115.

Fig. 3. zeigt für ein erstes Ausführungsbeispiel in Tabellenform vier mögliche Pfade, die jeweils zugeordneten Pfadmetrikwerte m_A, m_:B, ..., m_X, die Anzahl der jeweiligen Hops und die jeweilige Auswahl der möglichen Pfade nach den Regeln a) bis h) für das Mesh-Netz der Fig.2; wobei als Sonderfall keiner der Mesh-Knoten ein Gerät im Energiesparmodus bzw. ein batteriebetriebenes Gerät enthält. Darin kommen alle Regeln a) bis h) zum Ergebnis, dass der obere Pfad (Fig. 2) in der ersten Reihe der Tabelle ausgewählt wird. Für den Pfad in der zweiten Reihe beträgt der durchschnittliche Linkmetrikwert $m_Alh_A = 500 : 4 = 125$, was größer ist als der maximal zulässige Schwellenwert $T_I = 120$, weshalb dieser Pfad nach Regel f) nicht zur Verfügung steht, weshalb das zugehörige Tabellenfeld dementsprechend schwarz schraffiert ist. Entsprechende Kriterien gelten für die anderen schwarzschraffierten Felder in dieser Tabelle.

Fig. 4. zeigt für ein zweites Ausführungsbeispiel in Tabellenform vier mögliche Pfade, die jeweils zugeordneten Pfadmetrikwerte m_A, m_:B, ..., m_X, , die Anzahl der jeweiligen Hops und die jeweilige Auswahl der möglichen Pfade nach den Regeln a) bis h) für das Mesh-Netz der Fig.2; wobei nur der Mesh-Knoten: **MP 7** Geräte im Energiesparmodus bzw. batteriebetriebene Geräte enthält. Das Ergebnis der nach den Regeln a) bis h) ausgewählten bzw. gesperrten Pfade ist in der vierten Spalte durch das Zeichen "x" bzw. durch eine schwarze Schraffur entsprechend angegeben.

Fig. 5. zeigt für ein drittes Ausführungsbeispiel in Tabellenform vier mögliche Pfade, die jeweils zugeordneten Pfadmetrikwerte m_A, m_:B, ..., m_X, , die Anzahl der jeweiligen Hops und die jeweilige Auswahl der möglichen Pfade nach den Regeln a) bis h) für das Mesh-Netz der Fig.2; wobei nur die Mesh-Knoten: **MP 4 und MP 7** Geräte im Energiesparmodus bzw. batteriebetriebene Geräte enthalten. Das Ergebnis der nach den Regeln a) bis h) ausgewählten bzw. gesperrten Pfade ist in der vierten Spalte durch das Zeichen "x" bzw. durch eine schwarze Schraffur entsprechend angegeben.

Fig. 6. zeigt für ein viertes Ausführungsbeispiel in Tabellenform vier mögliche Pfade, die jeweils zugeordneten Pfadmetrikwerte m_A, m_:B, ..., m_X, , die Anzahl der jeweiligen Hops und die jeweilige Auswahl der möglichen Pfade nach den Regeln a) bis h) für das Mesh-Netz der Fig.2; ; wobei nur die Mesh-Knoten: **MP 5 und MP 7** Geräte im Energiesparmodus bzw. batteriebetriebene Geräte enthalten. Das Ergebnis der nach den Regeln a) bis h) ausgewählten bzw. gesperrten Pfade ist in der vierten Spalte durch das Zeichen "x" bzw. durch eine schwarze Schraffur entsprechend angegeben.

Als Grundregel wird bei der Erfindung der Pfad ausgesucht, der die wenigstens Knoten bzw. Hops hat und dessen Pfadmetrik unterhalb eines vorgegebenen Schwellenwertes liegt. Wenn die ermittelten Pfade dieselbe Anzahl batteriebetriebene bzw. im Energiesparmodus betriebene Knoten aufweisen, nimmt man den Pfad mit der besseren Pfadmetrik - siehe Regel e) und f). Die Pfadmetrik ist hierbei die Qualität für die Übertragung der Datenpakete vom Quellknoten über die Knoten des Mesh-Netzwerkes zum Zielknoten, wobei sie zum Beispiel auch als Verbindungskosten (z.B. Telefongebühren von USA über Kenia nach Deutschland könnten billiger sein als über Großbritannien oder umgekehrt) definiert werden können, die vom Benutzer an den Netzbetreiber gezahlt werden müssen. Die Pfadmetrik kann auch die Anzahl der Hops, damit auch die Signallaufzeit beinhalten, da z.B. Telefongespräche über einen oder mehrere Satelliten zu langen Signallaufzeiten haben, die z.B. beim Telefonieren zu großen Gesprächspausen benötigen, bevor eine Antwort gesendet werden kann.

## Patentansprüche

1. Verfahren zum Bestimmen einer Routing-Metrik in Mesh-Netzwerken, insbesondere gemäß dem Standard IEEE 802.11s in Wireless Mesh-Netzwerken, wobei die auf unterschiedlichen Pfaden vom Quellknoten über die Mesh-Knoten des Mesh-Netzwerkes zum Zielknoten gesandten Routing-Nachrichten ausgewertet werde um den besten Pfad für die Übertragung der Datenpaketen vom Quellknoten [MP1] zum Zielknoten [MP8] zu ermitteln, **dadurch gekennzeichnet, dass** in jeder vom Quellknoten über unterschiedliche Pfade zum Zielknoten gesandten Routing-Nachricht ein Parameter *p* mit einer Anzahl Bits, vorzugsweise zwei Bits, für die Anzahl der im Pfad im Energiesparmodus bzw. im Batteriebetrieb betriebenen Mesh-Knoten verwendet wird, während die restlichen Bits der Routing-Nachricht für die Pfadmetrik verwendet werden, dass jeder batteriebetriebene bzw. im Energiesparmodus betriebene MeshKnoten beim Aktualisieren der Pfadmetrik den Parameter *p* für die Anzahl der im Pfad im Energiesparmodus bzw. im Batteriebetrieb betriebenen MeshKnoten um 1 erhöht, es sei denn, der Parameter *p* hat bereits seinen Maximalwert N erreicht, und dass die Auswahl des besten Pfades im Zielknoten anhand von einer oder mehreren vorgegebenen Auswahlregeln erfolgt, die auch die Information zum Vorhandensein von batteriebetriebenen Mesh-Knoten im entsprechenden Pfad berücksichtigen.

2. Verfahren nach Anspruch 1, **dadurch gekennzeichnet, dass** als Grundregel der Pfad ausgewählt wird, der die wenigsten Mesh-Knoten bzw. Hops hat und dessen Pfadmetrik unterhalb eines vorgegebenen Schwellenwertes liegt, wobei bei Gleichheit der Anzahl batteriebetriebener bzw. im Energiesparmodus betriebener Mesh-Knoten, der Pfad mit der besseren Pfadmetrik ausgewählt wird.

3. Verfahren nach Anspruch 1, **dadurch gekennzeichnet, dass** für die Auswahl nur Pfade ohne batteriebetriebene bzw. im Batteriebetrieb betriebene Mesh-Knoten verwendet werden (Regel a).

4. Verfahren nach Anspruch 1, **dadurch gekennzeichnet, dass** nur Pfade mit der besten Pfadmetrik verwendet werden (Regel b).

5. Verfahren nach Anspruch 1, **dadurch gekennzeichnet, dass** der beste Pfad mit den wenigsten batteriebetriebenen bzw. in Batteriebetrieb betriebenen MeshKnoten verwendet wird (Regel c).

6. Verfahren nach Anspruch 1, **dadurch gekennzeichnet, dass** für jeden batteriebetriebenen bzw. im Energiesparmodus betriebenen Mesh-Knoten ein vorgegebener Strafwert $p_s$ dem Wert der Pfadmetrik zugefügt wird.

7. Verfahren nach Anspruch 1, **dadurch gekennzeichnet, dass** aus allen Pfaden mit einer Pfadmetrik besser oder gleich als der Pfadmetrik-Schwellenwert T_p wird der Pfad mit den wenigsten batteriebetriebenen bzw. im Energiesparmodus betriebenen Mesh-Knoten ausgewählt (Regel e).

8. Verfahren nach Anspruch 1, **dadurch gekennzeichnet, dass** aus allen Pfaden mit einem durchschnittlichen Link-Metrik-Wert, der sich errechnet aus dem Wert der Pfadmetrik dividiert durch die Anzahl der Hops und der besser oder gleich als ein vorgegebener Linkmetrik-Schwellenwert T_l ist, der Pfad mit den wenigsten batteriebetriebenen bzw. im Energiesparmodus betriebenen MeshKnoten ausgewählt wird (Regel f).

9. Verfahren nach Anspruch 1, **dadurch gekennzeichnet, dass** der Pfad mit der kleinsten Anzahl von batteriebetriebenen bzw. im Energiesparmodus betriebenen Mesh-Knoten ausgewählt wird (Regel g).

10. Verfahren nach Anspruch 1, **dadurch gekennzeichnet, dass** die Verfahren mindestens zweier Ansprüche der Ansprüche 2 bis 9 zur Anwendung kommen.

11. Anordnung zur Durchführung des Verfahrens nach einem der Ansprüche 1 bis 10 zum Bestimmen einer Routing-Metrik in Mesh-Netzwerken, insbesondere gemäß dem Standard IEEE 802.11s in Wireless Mesh-Netzwerken, wobei die auf unterschiedlichen Pfaden vom Quellknoten über die Mesh-Knoten des Mesh-Netzwerkes zum Zielknoten gesandten Routing-Nachrichten ausgewertet werden, um den besten Pfad für die Übertragung der Datenpakete vom Quellknoten zum Zielknoten zu ermitteln,

- wobei in jeder vom Quellknoten über unterschiedliche Pfade zum Zielknoten gesandten Routing-Nachricht ein Parameter *p* mit einer Anzahl Bits, vorzugsweise zwei Bits, für die Anzahl der im Pfad im Energiesparmodus bzw. im Batteriebetrieb betriebenen Mesh-Knoten vorhanden ist, während die restlichen Bits der Routing-Nachricht für die Pfadmetrik verwendet werden,
- wobei das Mesh-Netzwerk aus einer Vielzahl von Mesh-Knoten gebildet ist und auch im Energiesparmodus bzw. im Batteriebetrieb betriebenen Mesh-Knoten enthalten kann,
- wobei zumindest in jedem batteriebetriebenen bzw. im Energiesparmodus betriebenen Mesh-Knoten eine Steuervorrichtung vorhanden ist, die die empfangene Routing-Nachricht auswertet und neben dem beim Aktualisieren der Pfadmetrik in der empfangenen Routing-Nachricht auch den Parameter *p* für die Anzahl der im Pfad im Energiesparmodus bzw. im Batteriebetrieb betriebenen Mesh-Knoten um 1 erhöht, es sei denn, der Parameter *p* hat bereits seinen Maximalwert N erreicht,
- wobei jeder Mesh-Knoten die aktualisierte Routing-Nachricht an den nächstfolgenden Mesh-Knoten weiter leitet und
- wobei in jedem als Zielknoten dienenden Mesh-Knoten eine Steuervorrichtung vorhanden ist, die den besten Pfad anhand von einer oder mehreren vorgegebenen Auswahlregeln auswählt aus allen vom Quellknoten zum Zielknoten möglichen Pfaden unter Berücksichtigung des Parameters *p* für die Anzahl der im jeweiligen Pfade im Energiesparmodus bzw. im Batteriebetrieb betriebenen MeshKnoten und der jeweiligen Pfadmetrik.

## Claims

**1.** A method for determining a routing-metric in mesh networks, in particular according to standard IEEE 802.11s in wireless mesh networks, comprising interpreting routing messages sent via various paths from the source node via the mesh nodes of the mesh network to the target node to determine the best path for transmitting the data packets from the source node MP4 to the target node MP8, wherein in each routing message sent from the source node through various paths to the target node, a parameter *p* with a number of bits, preferably two bits, is used for the number of mesh nodes in the path operated in energy-saving mode or in battery operation, while the remaining bits of the routing message are used for the path metric, wherein each mesh node that is battery-operated or operated in energy-saving mode increments parameter *p* for the number of mesh nodes in the path that are battery-operated or operated in energy-saving mode by 1 when the path metric is updated, unless parameter *p* has already reached its maximum value, and wherein the best path in the target node is selected on the basis of one or more predetermined selection rules which also take account of information about the presence of battery-operated mesh nodes in the corresponding path.

**2.** A method according to claim 1 wherein, as a general rule, the path selected is the one with the fewest mesh nodes or hops and whose path metric lies within a preset threshold value, such that if the number of mesh nodes that are battery-operated or operating in energy-saving mode is the same, the path with the better path metric is selected.

**3.** A method according to claim 1 wherein only paths without mesh nodes that are battery-operated or operating in energy-saving mode are used for the selection (rule a).

**4.** A method according to claim 1 wherein only paths with the best path metric are used (rule b).

**5.** A method according to claim 1 wherein the best path with the fewest mesh nodes that are battery-operated or operating in energy-saving mode is used (rule c),

**6.** A method according to claim 1 wherein a preset penalty value $p_s$ is added to the path metric value for each mesh node that is battery-operated or operating in energy-saving mode.

**7.** A method according to claim 1 wherein the path with the fewest mesh nodes that are battery-operated or operating in energy-saving mode is selected from among all paths with a path metric that is better than or equal to a path metric threshold value T_p (rule e).

**8.** A method according to claim 1 wherein the path with the fewest mesh nodes that are battery-operated or operating in energy-saving mode is selected from among all paths with an average link metric value that is calculated from the path metric value divided by the number of hops and is better than or equal to a preset link metric threshold value T_l (rule f).

**9.** A method according to claim 1 wherein the path with the smallest number of mesh nodes that are battery-operated or operating in energy-saving mode is selected (rule g).

**10.** A method according to claim 1 wherein the methods of at least two claims of claims 2 to 9 are used.

**11.** An arrangement for performing the method according to any one of claims 1 to 10 for determining a routing-metric in mesh networks, in particular according to standard IEEE 802.11s in wireless mesh networks, wherein the routing messages sent on various paths from the source node via the mesh nodes of the mesh network to the target node are evaluated to determine the best path for sending data packets from the source node to the target node.

• wherein in each routing message sent from the source node through various paths to the target node, a parameter *p* with a number of bits, preferably two bits, is used for a number of mesh nodes in the path that are in energy-saving mode or are battery-operated, while the remaining bits in the routing message are used for the path metric,
• wherein the mesh network comprises multiple mesh nodes and can also contain mesh nodes that are battery-operated or operating in energy-saving mode,
• wherein at least each mesh node that is battery-operated or operating in energy-saving mode comprises a control device which evaluates the received routing message and which, when the path metric in the received routing message is updated, adds 1 to parameter *p* for the number of mesh nodes in the path that are battery-operated or operating in energy-saving mode by 1, unless parameter *p* has already reached its maximum value N,
• wherein each mesh node forwards the updated routing message to the next mesh node, and
• wherein each mesh node serving as a target node comprises a control device which selects the best path from among all possible paths from the source node to the target node on the basis of one or more preset selection rules and based on consideration of parameter p for the number of mesh nodes in each path that are battery-operated or operating in energy-saving mode and on the respective path metric.

**Revendications**

**1.** Procédé de détermination d'une métrique de routage dans des réseaux maillés, en particulier selon la norme IEEE 802.11s dans des réseaux maillés sans fil, les messages de routage, envoyés sur différents chemins du noeud source au noeud cible en passant par les noeuds maillés du réseau maillé, étant évalués afin d'établir le meilleur chemin pour la transmission des paquets de données du noeud source (MP) au noeud cible (MP2), **caractérisé en ce que**, dans chaque message de routage envoyé du noeud source au noeud cible en passant par différents chemins, on emploie un paramètre p ayant un certain nombre de bits, de préférence deux bits, relatif au nombre des noeuds maillés exploités dans le chemin en mode d'économie d'énergie respectivement en mode sur batterie, tandis que l'on emploie les bits restants du message de routage pour la métrique de chemin, **en ce que**, lors de l'actualisation de la métrique de chemin, chaque noeud maillé exploité en mode sur batterie respectivement en mode d'économie d'énergie augmente d'une unité le paramètre p relatif au nombre des noeuds maillés exploités dans le chemin dans le mode d'économie d'énergie respectivement dans le mode sur batterie, à moins que le paramètre p ait déjà atteint sa valeur maximale N, et **en ce que** la sélection du meilleur chemin est effectuée dans le noeud cible à l'aide d'une ou de plusieurs règles de sélection prédéfinies qui tiennent compte également des informations sur la présence de noeuds maillés exploités sur batterie dans le chemin correspondant.

**2.** Procédé selon la revendication 1, **caractérisé en ce que** l'on sélectionne par principe le chemin qui a le moins de noeuds maillés respectivement de relais et dont la métrique de chemin est en dessous d'une valeur de seuil prédéfinie, le chemin ayant la meilleure métrique de chemin étant sélectionné en cas d'égalité du nombre de noeuds maillés exploités en mode batterie respectivement en mode d'économie d'énergie.

**3.** Procédé selon la revendication 1, **caractérisé en ce que**, pour la sélection, on emploie uniquement des chemins sans noeuds maillés exploités en mode sur batterie respectivement en mode d'économie d'énergie (règle a).

**4.** Procédé selon la revendication 1, **caractérisé en ce que** l'on emploie uniquement des chemins ayant la meilleure métrique de chemin (règle b).

**5.** Procédé selon la revendication 1, **caractérisé en ce que** l'on emploie le meilleur chemin ayant le moins de noeuds maillés exploités en mode sur batterie respectivement en mode d'économie d'énergie (règle c).

**6.** Procédé selon la revendication 1, **caractérisé en ce que**, pour chaque noeud maillé exploité en mode sur batterie respectivement en mode d'économie d'énergie, on ajoute une valeur de pénalisation prédéfinie $p_s$ à la valeur de la métrique de chemin.

**7.** Procédé selon la revendication 1, **caractérisé en ce que**, parmi tous les chemins ayant une métrique de chemin égale ou meilleure que la valeur de seuil de métrique de chemin T_p, on sélectionne le chemin ayant le moins de noeuds maillés exploités en mode sur batterie respectivement en mode d'économie d'énergie (règle e).

**8.** Procédé selon la revendication 1, **caractérisé en ce que**, parmi tous les chemins ayant une valeur de métrique de liaison moyenne, qui résulte de la valeur de la métrique de chemin divisée par le nombre de relais et qui est égale ou meilleure qu'une valeur de seuil de métrique de liaison prédéfinie T_I, on sélectionne le chemin ayant le moins de noeuds maillés exploités en mode sur batterie respectivement en mode d'économie d'énergie (règle f).

**9.** Procédé selon la revendication 1, **caractérisé en ce que** l'on sélectionne le chemin ayant le plus petit nombre de noeuds maillés exploités en mode sur batterie respectivement en mode d'économie d'énergie (règle g).

**10.** Procédé selon la revendication 1, **caractérisé en ce que** l'on met en application les procédés d'au moins deux revendications parmi les revendications 2 à 9.

**11.** Dispositif d'exécution du procédé selon l'une quelconque des revendications 1 à 10 servant à déterminer une métrique de routage dans des réseaux maillés, en particulier selon la norme IEEE 802.11s dans des réseaux maillés sans fil, les messages de routage, envoyés sur différents chemins du noeud source au noeud cible en passant par les noeuds maillés du réseau maillé, étant évalués afin d'établir le meilleur chemin pour la transmission des paquets de données du noeud source au noeud cible,

- chaque message de routage, envoyé du noeud source au noeud cible en passant par différents chemins, comportant un paramètre p ayant un certain nombre de bits, de préférence deux bits, relatif au nombre des noeuds maillés exploités dans le chemin dans le mode d'économie d'énergie respectivement dans le mode sur batterie, tandis que les bits restants du message de routage sont employés pour la métrique de chemin,
- le réseau maillé étant formé d'une pluralité de noeuds maillés et pouvant également contenir des noeuds maillés exploités dans le mode d'économie d'énergie respectivement dans le mode sur batterie,
- chaque noeud maillé, exploité en mode sur batterie respectivement en mode d'économie d'énergie, contenant au moins un système de commande qui évalue le message de routage reçu et qui, en plus, lors de l'actualisation de la métrique de chemin dans le message de routage reçu, augmente d'une unité également le paramètre p relatif au nombre des noeuds maillés exploités dans le chemin dans le mode d'économie d'énergie respectivement dans le mode sur batterie, à moins que le paramètre p ait déjà atteint sa valeur maximale N,
- chaque noeud maillé transmettant le message de routage actualisé au noeud maillé suivant et
- chaque noeud maillé, qui sert de noeud cible, contenant un système de commande qui sélectionne à l'aide d'une ou de plusieurs règles de sélection prédéfinies le meilleur chemin parmi tous les chemins possibles du noeud source au noeud cible en tenant compte du paramètre p, relatif au nombre des noeuds maillés exploités dans le chemin respectif dans le mode d'économie d'énergie respectivement dans le mode sur batterie, et de la métrique de chemin respective.

← Bit-Nr.
0
7
8
15
16
23
24
29
30
31
0
30
32
bisherige Pfadmetrik
Anzahl der batteriebetriebenen
Mesh-Knoten im Pfad


Fig. 1

Quellknoten
Zielknoten
MP 1
MP 2
MP 3
MP 4
MP 5
MP 6
MP 7
MP 8
105
105
105
120
120
110
110
130
130

Fig. 2

| Mögliche Pfade | Pfadmetrik | Hop Count | Auswahl nach Regel | | | | | | | |
|---|---|---|---|---|---|---|---|---|---|---|
| | | | a | b | c | d | e | f | g | h |
| MP 1 --> MP 4 --> MP 5 --> MP 6 --> MP 8 | 460 | 4 | x | x | x | x | x | x | x | x |
| MP 1 --> MP 4 --> MP 5 --> MP 7 --> MP 8 | 500 | 4 | | | | | | | | |
| MP 1 --> MP 2 --> MP 3 --> MP 5 --> MP 6 --> MP 8 | 535 | 5 | | | | | | | | |
| MP 1 --> MP 2 --> MP 3 --> MP 5 --> MP 7 --> MP 8 | 575 | 5 | | | | | | | | |

Batteriebetriebene bzw. im Energiesparmodus betriebenen Geräte sind in keinem Knoten!

Fig. 3

| Mögliche Pfade | Pfadmetrik | Hop Count | Auswahl nach Regel | | | | | | | |
|---|---|---|---|---|---|---|---|---|---|---|
| | | | a | b | c | d | e | f | g | h |
| MP 1 --> MP 4 --> MP 5 --> MP 6 --> MP 8 | 460 | 4 | x | x | x | x | x | x | x | x |
| MP 1 --> MP 4 --> MP 5 --> **MP 7** --> MP 8 | 500 | 4 | | | | | | | | |
| MP 1 --> MP 2 --> MP 3 --> MP 5 --> MP 6 --> MP 8 | 535 | 5 | | | | | | | | |
| MP 1 --> MP 2 --> MP 3 --> MP 5 --> **MP 7** --> MP 8 | 575 | 5 | | | | | | | | |

batteriebetriebene Geräte: nur in **MP 7**

Fig. 4

| Mögliche Pfade | Pfadmetrik | Hop Count | Auswahl nach Regel | | | | | | | |
|---|---|---|---|---|---|---|---|---|---|---|
| | | | a | b | c | d | e | f | g | h |
| MP 1 --> **MP 4** --> MP 5 --> MP 6 --> MP 8 | 460 | 4 | | x | | | | | | |
| MP 1 --> **MP 4** --> MP 5 --> **MP 7** --> MP 8 | 500 | 4 | | | | | | | | |
| MP 1 --> MP 2 --> MP 3 --> MP 5 --> MP 6 --> MP 8 | 535 | 5 | x | | x | x | x | x | x | x |
| MP 1 --> MP 2 --> MP 3 --> MP 5 --> **MP 7** --> MP 8 | 575 | 5 | | | | | | | | |

batteriebetriebene Geräte: nur in **M4** und **MP7**

Fig. 5

| Mögliche Pfade | Pfadmetrik | Hop Count | Auswahl nach Regel | | | | | | | |
|---|---|---|---|---|---|---|---|---|---|---|
| | | | a | b | c | d | e | f | g | h |
| MP 1 --> MP 4 --> **MP 5** --> MP 6 --> MP 8 | 460 | 4 | | x | x | x | x | x | | x |
| MP 1 --> MP 4 --> **MP 5** --> **MP 7** --> MP 8 | 500 | 4 | | | | | | | | |
| MP 1 --> MP 2 --> MP 3 --> **MP 5** --> MP 6 --> MP 8 | 535 | 5 | | | | | | | x | x |
| MP 1 --> MP 2 --> MP 3 --> **MP 5** --> **MP 7** --> MP 8 | 575 | 5 | | | | | | | | |

batteriebetriebe Geräte: nur in **MP 5** und **MP 7**

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 2008122674 A2
- EP 2009003271 W


### In der Beschreibung aufgeführte Nicht-Patentliteratur


- IEEE P802.11s™/D2.0 Draft STANDARD for Information Technology. *IEEE P802.11sID2.0 Draft-Standard,* Marz 2008, I-XVII1-242
- **LAN D. CHAKERES ; ELIZABETH M. BELDING-ROYER.** Transparent Influence of Path Selection in Heterogeneous Ad hoc Networks. *15th IEEE International Symposium on Personal, Indoor and Mobile Radio Communications (PIMRC,* September 2004, 3
- **CHARLES E. PERKINS ; ELIZABETH M. BELDING-ROYER ; SAMIR R. DAS.** Ad hoc On-Demand Distance Vector (AODV) Routing. *IETF RFC 3561 (Experimental,* Juli 2003, 1-36
- **VON MICHELLE GONG ; KAZUYUKI SAKODA ; JARKKO KNECKT.** *Thoughts on Interaction between Power Management and Path Selection,* Juli 2007
- **VON LIWEN CHU ; GEORGE VLANTIS.** *Symmetrical Airtime Link Metric Report and Path Loop Avoidance,* April 2008
- **MICHELLE GONG ; KAZUYUKI SAKODA ; JARKKO KNECKT.** *Thoughts on Interaction between Power Management and Path Selection,* Juli 2007